# EUROPÄISCHE PATENTSCHRIFT

(11) **EP 4 349 554 B1**
(45) Veröffentlichungstag und Bekanntmachung des Hinweises auf die Patenterteilung: **25.06.2025**
(21) Anmeldenummer: 22020480.4
(22) Anmeldetag: 04.10.2022
(51) Int. Cl.: B28B 1/00, B28B 7/34, B28B 23/04, B33Y 10/00

(54) **VERFAHREN ZUR HERSTELLUNG EINER BETONPLATTE AUS VORGESPANNTEM BETON**
METHOD FOR PRODUCING A CONCRETE PANEL FROM PRESTRESSED CONCRETE
PROCÉDÉ DE FABRICATION D'UNE DALLE EN BÉTON PRÉCONTRAINT

(43) Veröffentlichungstag der Anmeldung: 10.04.2024
(73) Patentinhaber: Holcim Technology Ltd, 6300 Zug (CH)
(72) Erfinder: Reinke, Maximilian Leo Josef, CH-5113 Holderbank (CH); Switala, Jörg, CH-5113 Holderbank (CH)
(74) Vertreter: SONN Patentanwälte GmbH & Co KG

(56) Entgegenhaltungen:
- WO-A1-2018/230855
- AT-U2- 16 644
- DE-U1- 29 824 448

## Beschreibung

Die Erfindung betrifft ein Verfahren zur Herstellung einer Betonplatte aus vorgespanntem Beton, deren Spannglieder eine Vielzahl von die Betonplatte durchsetzenden, parallel zur Plattenebene verlaufenden Rovings, insbesondere Kohlefaser-Rovings, umfassen, umfassend die Schritte:
- Herstellen einer Schalung, die an der Unterseite von einem Fertigungstisch begrenzt ist und deren Seitenwände von vorgespannten Rovings durchsetzt werden,
- Gießen von Beton in die Schalung und Abbindenlassen des Betons und
- Abtrennen seitlich überstehender Bereiche der Rovings.

Bei der Herstellung von vorgespanntem Beton werden Spannglieder, wie z.B. Spanndrähte oder Spannlitzen, kraftschlüssig mit dem Beton verbunden, sodass eine Relativverschiebung zwischen beiden Werkstoffen praktisch nicht stattfindet. Hierbei kann ein direkter Verbund zwischen Spanngliedern und Beton hergestellt werden, wie dies häufig bei der Herstellung von Betonfertigteilen in Fertigteilwerken erfolgt, bei der gespannte Spanndrähte oder -litzen in das Fertigteil einbetoniert werden. Nach dem Betonieren und Erhärten des Beton wird die Vorspannung gelöst. Durch den Verbund zwischen Beton und Spanngliedern sowie ein Verkeilen der entspannten Spannglieder ist die Spannkraft im Fertigteil aufgebracht.

Aus der WO 2014/040653 A1 ist ein Betonfertigbauteil bekannt geworden, bei dem die Armierung bzw. die Spannglieder von einer Vielzahl von Rovings gebildet werden, **d.h.** von Bündeln, Strängen oder Multifilamentgarnen aus parallel angeordneten Filamenten oder Endlosfasern. Die Rovings können hierbei Kohle- oder Glasfasern umfassen.

Für die Herstellung derartiger faserarmierter Betonbauteile müssen die Rovings in mehreren Lagen in Längs- und Querrichtung übereinanderliegend gespannt werden. Dieser Vorgang muss vor Beginn der Fertigung der Betonbauteile abgeschlossen sein und die gespannten Rovings müssen die Schalung für das Betonbauteil durchsetzen. Die Rovings sind dabei aus der Schalung auszusparen oder zu umbauen. Herkömmliche Schalungssysteme erweisen sich hier als nachteilig. Die Vielzahl von Öffnungen für die zu spannenden Rovings erschweren den Einsatz von vorgefertigten Schalungsteilen. Weiters muss die Schalung derart gestaltet sein, dass eine flüssigkeitsdichte Durchführung der Rovings gewährleistet ist, um ein Austreten von frischem Beton oder anderen Flüssigkeiten zu vermeiden.

Erschwerend kommt hinzu, dass insbesondere Kohlefaser-Rovings überaus bruchempfindlich sind, sodass diese bei der Erstellung oder der Montage der Schalung leicht beschädigt werden können.

WO 2018/230855 A1 offenbart ein Verfahren zur Herstellung einer zementartigen Struktur aus vorgespanntem Beton, deren Spannglieder eine Vielzahl von die zementartige Struktur durchsetzenden, parallel zur Plattenebene verlaufenden Rovings umfassen, umfassend die Schritte:
- Herstellen einer Schalung, die an der Unterseite von einem Fertigungstisch begrenzt ist und deren Seitenwände von vorgespannten Rovings durchsetzt werden,
- Gießen von Beton in die Schalung und Abbindenlassen des Betons und
- Abtrennen seitlich überstehender Bereiche der Rovings.

Die Erfindung zielt daher darauf ab, die Herstellung von Betonplatten aus vorgespanntem Beton unter Verwendung von Rovings hinsichtlich der Schalung zu verbessern. Insbesondere soll eine Schalung geschaffen werden, die mit einfachen Mitteln und in kurzer Zeit erstellt werden kann und die eine flüssigkeitsdichte Durchführung der Rovings erlaubt, ohne die Rovings zu beschädigen. Weiters soll die Schalung kein unnötiges Abfallmaterial verursachen, das aufwändig entsorgt werden muss.

Zur Lösung dieser Aufgabe besteht die Erfindung bei einem Verfahren der eingangs genannten Art im Wesentlichen darin, dass die Seitenwände der Schalung durch Aufschütten eines pulverförmigen, durch Flüssigkeitszugabe erhärtenden Baustoffs auf den Fertigungstisch und Befeuchten der Schüttung hergestellt werden.

Durch das Aufschütten eines pulverförmigen Baustoffs werden die Rovings mechanisch kaum belastet, sodass eine Beschädigung derselben vermieden wird. Auf Grund des pulverförmigen Zustands kann der Baustoff in die Zwischenräume zwischen benachbarten Rovings rieseln, wodurch eine vollständige Einbettung der Rovings in die entstehende Schüttung gelingt. Erforderlichenfalls kann dieser Vorgang durch eine Rüttelbewegung, z.B. ein Rütteln des Fertigungstisches, unterstützt werden. Die Einbettung der Rovings in die Schüttung gewährleistet nach der Stabilisierung oder Erhärtung der Schüttung eine dichte Durchführung der Rovings durch die Schüttung bzw. die dadurch entstandene Randschalung. Die Schüttung wird hierbei dadurch zu einer formstabilen Randschalung gebildet, dass die Schüttung aus einem durch Flüssigkeitszugabe erhärtenden Baustoff besteht, der nach dem Aufschütten befeuchtet wird.

Vorzugsweise ist hierbei vorgesehen, dass der Baustoff ein hydraulisches Bindemittel, insbesondere Zement, enthält oder aus diesem Besteht. Dies hat den positiven Effekt, dass die Randschalung in Bezug auf den Beton kein Fremdmaterial darstellt und nach dem Härten der Betonplatte in einfacher Weise vom Rand der Platte entfernt, wie z.B. abgebrochen oder abgesägt werden kann. Die Randschalung kann in der Folge zerkleinert und je nach Zusammensetzung des hydraulischen Bindemittels für die Herstellung neuer Beton- und/oder Recyclingprodukte wiederverwendet werden.

Als Zement kann ein Zement auf Portlandzementbasis verwendet werden, wie die in der Norm EN 197-1 definierten Zemente, einschließlich Portlandzement CEM I, Portlandkompositzemente CEM II, Hochofenzement CEM III, Puzzolanzement CEM IV und Kompositzement CEM V. Um eine kurze Abbindezeit zu gewährleisten, kann dem Zement ein Abbindebeschleuniger zugesetzt sein.

Besonders bevorzugt handelt es sich bei dem hydraulischen Bindemittel um einen Schnellzement, wie z.B. einen Calciumaluminat-Zement.

Als Zement enthaltender Baustoff kann ein Mörtel verwendet werden.

Der Baustoff wird vorzugsweise auf die vorgespannten Rovings geschüttet, wobei die Schüttung einen im Wesentlichen trapezförmigen Querschnitt aufweisen kann.

Um eine automatisierte Herstellung der Schüttung zu erreichen, sieht eine bevorzugte Ausbildung des erfindungsgemäßen Verfahrens vor, dass die Schüttung durch Ausbringen des Baustoffs aus einem verfahrbaren Ausbringungskopf einer Baustoffzufuhr- oder -bevorratungsvorrichtung hergestellt wird. Der Ausbringungskopf kann hierbei entlang des auszubildenden Schalungsrandes verfahren werden, während der pulverförmige Baustoff auf den Fertigungstisch ausgebracht wird, sodass eine linienförmige Schüttung entsteht. Die linienförmige Schüttung umgibt dabei denjenigen Bereich, in den der Beton in der Folge für die Ausbildung der Betonplatte gegossen wird, sodass eine umlaufende Randschalung gebildet werden kann.

Das Befeuchten der Schüttung umfasst vorzugsweise das Beaufschlagen, insbesondere Besprühen, der Schüttung mit einer Flüssigkeit, insbesondere Wasser. Hierbei wird die Flüssigkeit auf die Oberfläche der Schüttung aufgebracht, sodass der Oberflächenbereich der Schüttung abbindet. Ein Abbinden des gesamten Schüttungsquerschnitts ist nicht unbedingt erforderlich, da es für die Formstabilität der Randschalung ausreicht, wenn sich eine stabile Haut ausbildet. Dies insbesondere deshalb, weil die Schüttung nach dem Eingießen des frischen Betons weitere Flüssigkeit aus dem Beton ansaugt, was den weiteren Abbinde -und Härtungsprozess der Schüttung fördert.

Die Aufbringung des pulverförmigen Baustoffs mittels des verfahrbaren Ausbringungskopfs kann in einem einzigen Durchgang erfolgen. Alternativ können mehrere Schichten des Baustoffs übereinander und/oder nebeneinander aufgebracht werden. Die Befeuchtung der Schüttung erfolgt hierbei vorzugsweise nach der Aufbringung der letzten Baustoffschicht. Alternativ kann die Befeuchtung nach jeder Baustoffschicht erfolgen.

Das Aufbringen der Flüssigkeit auf die Schüttung kann zeitlich unmittelbar nach dem Aufschütten des Baustoffs erfolgen, insbesondere mit Hilfe einer Flüssigkeitsausbringungsvorrichtung, wie z.B. Sprühdüse, die synchron mit dem verfahrbaren Ausbringungskopf mitläuft. In diesem Zusammenhang sieht eine bevorzugte Ausbildung vor, dass das Beaufschlagen mittels wenigstens einer am Ausbringungskopf angeordneten Flüssigkeitsausbringungsvorrichtung, insbesondere Sprühdüse, erfolgt. Die Position der Flüssigkeitsausbringungsvorrichtung(en) am Ausbringungskopf ist grundsätzlich beliebig. Beispielsweise kann die Sprühdüse in Verfahrrichtung des Ausbringungskopfs hinter einer Ausbringungsöffnung des Ausbringungskopfs angeordnet und auf die von der voranlaufenden Ausbringungsöffnung ausgebrachte Schüttung gerichtet sein. Vorzugsweise umfasst der Ausbringungskopf eine Mehrzahl von Sprühdüsen, die voneinander verschiedene Düsenachsen aufweisen. Auf diese Weise kann die Flüssigkeit beispielsweise gezielt auf die beiden schrägen Flanken der Schüttung und auf die obere Fläche gerichtet werden.

Der Ausbringungskopf kann weiters ein der Ausbringungsöffnung in Verfahrrichtung nachgelagertes Abstreifelement aufweisen, das eine definierte Höhe übersteigendes Material abstreift, um dadurch eine im Wesentlichen plane, horizontale obere Fläche zu erzeugen.

Bevorzugt kann weiters vorgesehen sein, dass der von der Schüttung zu bedeckende Bereich des Fertigungstisches vor der Aufbringung der Schüttung befeuchtet wird. Dies fördert ein Abbinden der Schüttung an der unteren Grenzfläche der Schüttung, was das nachfolgende Abtrennen der gehärteten Schüttung vom Fertigungstisch erleichtert, nachdem die Betonplatte hergestellt worden ist. Die Befeuchtung des Fertigungstisches erfolgt hierbei vorzugsweise mittels einer am Ausbringungskopf angeordneten Sprühdüse.

Nach dem Abbinden und zumindest teilweisen Härten der Betonplatte können die Seitenwände der Schalung entfernt werden, z.B. durch Absägen von der Betonplatte abgetrennt werden. Das Absägen kann hierbei als Besäumungsschnitt erfolgen, welcher der Betonplatte die gewünschten Abmessungen verleiht.

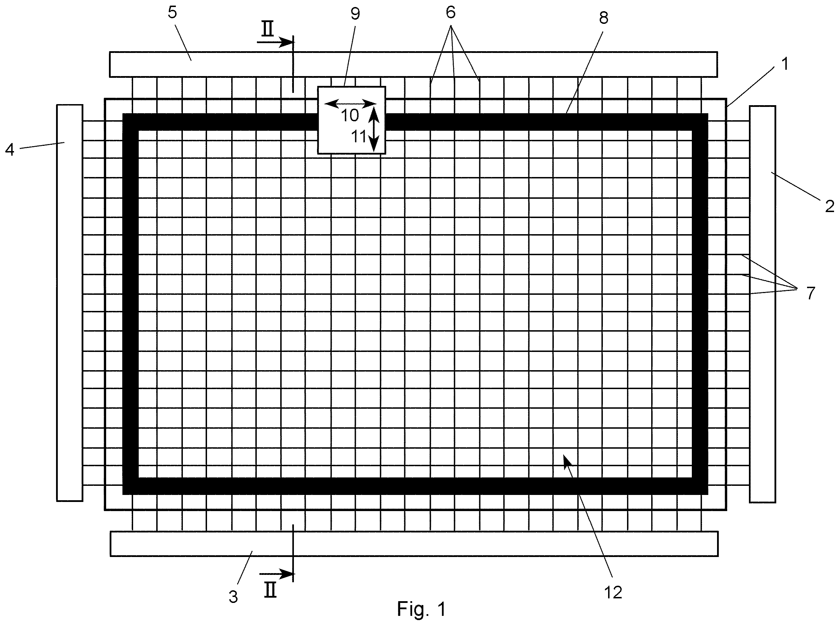

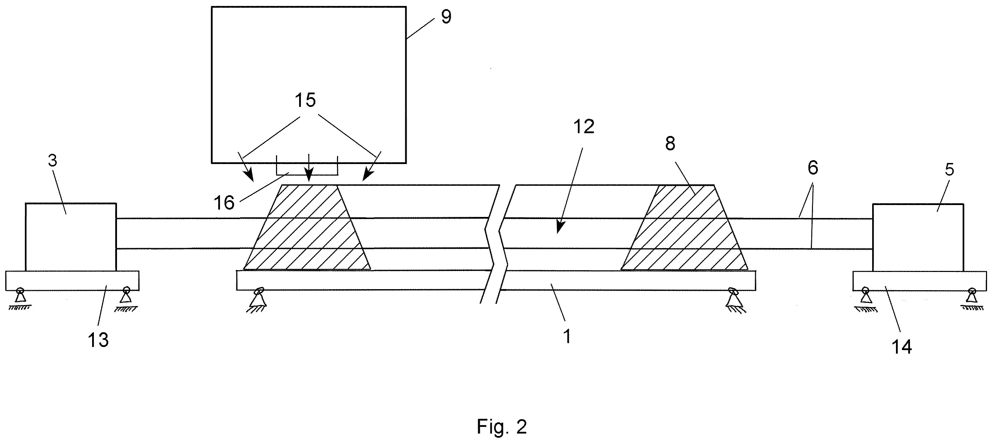

Die Erfindung wird nachfolgend anhand von in der Zeichnung schematisch dargestellten Ausführungsbeispielen näher erläutert, In dieser zeigen Fig. 1 eine Draufsicht auf einen Fertigungstisch zur Herstellung von Betonplatten und Fig. 2 einen Schnitt entlang der Linie II-II der Fig. 1.

In Fig. 1 ist ein Fertigungs- oder Schalungstisch 1 dargestellt, an dessen Rändern Haltelemente 2, 3, 4 und 5 angeordnet sind, wobei zwischen gegenüberliegenden Haltelementen 2 und 4 bzw. 3 und 5 jeweils eine Vielzahl von Carbon-Rovings 6,7 gespannt sind, wobei eine Gruppe von Carbon-Rovings 6 eine andere Gruppe von Carbon-Rovings 7 kreuzt und, wie in Fig, 2 ersichtlich, zumindest zwei Lagen von Carbon-Rovings übereinander angeordnet sind. Die Carbon-Rovings überspannen den Fertigungstisch 1 somit in zwei zueinander senkrechten Richtungen.

Der Schalungstisch 1 bildet den Boden einer Schalung, in welche zur Herstellung einer Betonplatte aus vorgespanntem Beton frischer Beton gegossen wird. Die Seitenwände der Schalung werden durch eine umlaufende Schüttung 8 aus einem pulverförmigen, durch Flüssigkeitszugabe erhärtenden Baustoff, insbesondere trockenem Zement oder Zementmörtel, ausgebildet. Die Ausbringung des Baustoffs erfolgt mittels eines verfahrbaren Ausbringungskopfs 9 einer Baustoffzufuhr- oder -bevorratungsvorrichtung. Der Ausbringungskopf 9 ist hierbei im Sinne der Doppelpfeile 10 und 11 verfahrbar und wird durch einen Antrieb entsprechend dem gewünschten Verlauf der Randschalung verfahren. Die Schüttung 8 wird über nicht dargestellte Sprühdüsen mit Flüssigkeit besprüht, sodass die Schüttung 8 zumindest oberflächlich abbindet und nach dem Abbinden eine formstabile Randschalung bildet.

Nach der Ausbildung der Randschalung wird flüssiger Beton in den von der Randschalung begrenzten Bereich 12 gegossen und abbinden gelassen. Nach dem Härten des Betons wird die Randschalung abgetrennt und es verbleibt eine Betonplatte aus vorgespanntem Beton. Die auf diese Weise hergestellte Betonplatte kann mittels einer geeigneten Trennvorrichtung, wie z.B. eine Betonsäge, an ihren Rändern besäumt und/oder in kleinere Plattenstücke aufgeteilt werden. Aus der Betonplatte können mittels einer Betonfräse auch beliebig geformte Betonbauteile gefräst werden.

In der Schnittdarstellung gemäß Fig. 2 ist ersichtlich, dass die Halteelemente 3 und 5 jeweils auf einer Aufnahmevorrichtung 13 bzw. 14 angeordnet sind. Weiters ist erkennbar, dass die Schüttung 8 einen durch den Schüttvorgang hervorgerufenen, im Wesentlichen trapezförmigen Querschnitt aufweist. Die Carbon-Rovings 8 durchsetzen die Schüttung 8 und sind in diese eingebettet, sodass ein dichter Abschluss des von der Schüttung 8 begrenzten Bereichs 12 für den flüssigen Beton gebildet wird.

Der Ausbringungskopfs 9 umfasst eine Ausbringungsöffnung 16 und ist weiters mit schematisch angedeuteten Sprühdüsen 15 zum Ausbringen von Flüssigkeit auf die Schüttung 8 ausgestattet.

## Patentansprüche

1. Verfahren zur Herstellung einer Betonplatte aus vorgespanntem Beton, deren Spannglieder eine Vielzahl von die Betonplatte durchsetzenden, parallel zur Plattenebene verlaufenden Rovings (6,7), insbesondere Kohlefaser-Rovings, umfassen, umfassend die Schritte:
- Herstellen einer Schalung, die an der Unterseite von einem Fertigungstisch (1) begrenzt ist und deren Seitenwände von vorgespannten Rovings (6,7) durchsetzt werden,
- Gießen von Beton in die Schalung und Abbindenlassen des Betons und
- Abtrennen seitlich überstehender Bereiche der Rovings (6,7),
wobei die Seitenwände der Schalung durch Aufschütten eines pulverförmigen, durch Flüssigkeitszugabe erhärtenden Baustoffs auf den Fertigungstisch (1) und Befeuchten der Schüttung (8) hergestellt werden.

2. Verfahren nach Anspruch 1, **dadurch gekennzeichnet, dass** der Baustoff ein hydraulisches Bindemittel, insbesondere Zement, enthält oder aus diesem Besteht.

3. Verfahren nach Anspruch 2, **dadurch gekennzeichnet, dass** das hydraulische Bindemittel ein Schnellzement ist.

4. Verfahren nach Anspruch 1, 2 oder 3, **dadurch gekennzeichnet, dass** der Baustoff auf die vorgespannten Rovings (6,7) geschüttet wird.

5. Verfahren nach einem der Ansprüche 1 bis 4, **dadurch gekennzeichnet, dass** die Schüttung (8) einen im Wesentlichen trapezförmigen Querschnitt aufweist.

6. Verfahren nach einem der Ansprüche 1 bis 5, **dadurch gekennzeichnet, dass** die Schüttung durch Ausbringen des Baustoffs aus einem verfahrbaren Ausbringungskopf (9) einer Baustoffzufuhr- oder -bevorratungsvorrichtung hergestellt wird.

7. Verfahren nach einem der Ansprüche 1 bis 6, **dadurch gekennzeichnet, dass** das Befeuchten der Schüttung (8) das Beaufschlagen, insbesondere Besprühen, der Schüttung (8) mit einer Flüssigkeit, insbesondere Wasser, umfasst.

8. Verfahren nach Anspruch 7, **dadurch gekennzeichnet, dass** das Beaufschlagen mittels wenigstens einer am Ausbringungskopf (9) angeordneten Flüssigkeitsausbringungsvorrichtung, insbesondere Sprühdüse, (15) erfolgt.

9. Verfahren nach einem der Ansprüche 1 bis 8, **dadurch gekennzeichnet, dass** der von der Schüttung (8) zu bedeckende Bereich des Fertigungstisches (1) vor der Aufbringung der Schüttung befeuchtet wird.

10. Verfahren nach Anspruch 9, **dadurch gekennzeichnet, dass** die Befeuchtung des Fertigungstisches mittels einer am Ausbringungskopf angeordneten Sprühdüse erfolgt.

## Claims

1. A method for producing a concrete slab made of prestressed concrete, whose tensioning members comprise a plurality of rovings (6, 7), particularly carbon fiber rovings, extending through the concrete slab parallel to the slab plane, comprising the steps:
- producing a formwork that is bounded at the bottom by a manufacturing table (1) and whose side walls are penetrated by prestressed rovings (6, 7),
- pouring concrete into the formwork and allowing the concrete to set, and
- cutting off laterally protruding areas of the rovings (6, 7),
whereby the side walls of the formwork are produced by piling a powdery construction material that hardens through liquid addition onto the manufacturing table (1) and moistening the pile (8).

2. Method according to claim 1, **characterized in that** the construction material contains or consists of a hydraulic binder, particularly cement.

3. Method according to claim 2, **characterized in that** the hydraulic binder is a rapid-hardening cement.

4. Method according to claim 1, 2 or 3, **characterized in that** the construction material is piled onto the prestressed rovings (6, 7).

5. Method according to any one of claims 1 to 4, **characterized in that** the pile (8) has a substantially trapezoidal cross-section.

6. Method according to any one of claims 1 to 5, **characterized in that** the pile is produced by discharging the construction material from a movable discharge head (9) of a construction material supply or storage device.

7. Method according to any one of claims 1 to 6, **characterized in that** the moistening of the pile (8) comprises applying, particularly spraying, a liquid, particularly water, onto the pile (8).

8. Method according to claim 7, **characterized in that** the application is carried out by means of at least one liquid discharge device, particularly a spray nozzle (15), arranged on the discharge head (9).

9. Method according to any one of claims 1 to 8, **characterized in that** the area of the manufacturing table (1) to be covered by the pile (8) is moistened before the pile (8) is applied.

10. Method according to claim 9, **characterized in that** the moistening of the manufacturing table is carried out by means of a spray nozzle arranged on the discharge head.

## Revendications

1. Procédé de fabrication d'une dalle de béton en béton précontraint, dont les éléments de précontrainte comprennent une pluralité de rovings (6, 7) traversant la dalle de béton, s'étendant parallèlement au plan de la dalle, notamment des rovings en fibres de carbone, comprenant les étapes suivantes:
- réalisation d'un coffrage délimité sur la face inférieure par une table de fabrication (1) et dont les parois latérales sont traversées par des rovings précontraints (6, 7),
- coulage du béton dans le coffrage et durcissement du béton, et
- découpe des parties des rovings (6, 7) dépassant latéralement,
dans lequel les parois latérales du coffrage sont réalisées en déversant sur la table de fabrication (1) un matériau de construction pulvérulent qui durcit par addition de liquide, et en humidifiant le tas (8).

2. Procédé selon la revendication 1, **caractérisé en ce que** le matériau de construction contient un liant hydraulique, notamment du ciment, ou est constitué de celui-ci.

3. Procédé selon la revendication 2, **caractérisé en ce que** le liant hydraulique est un ciment à prise rapide.

4. Procédé selon la revendication 1, 2 ou 3, **caractérisé en ce que** le matériau de construction est déversé sur les rovings précontraints (6, 7).

5. Procédé selon l'une quelconque des revendications 1 à 4, **caractérisé en ce que** le tas (8) présente une section essentiellement trapézoïdale.

6. Procédé selon l'une quelconque des revendications 1 à 5, **caractérisé en ce que** le tas est réalisé par distribution du matériau de construction à partir d'une tête de distribution mobile (9) d'un dispositif d'alimentation ou de stockage de matériau de construction.

7. Procédé selon l'une quelconque des revendications 1 à 6, **caractérisé en ce que** l'humidification du tas (8) comprend l'application, notamment la pulvérisation, d'un liquide, notamment de l'eau, sur le tas (8).

8. Procédé selon la revendication 7, **caractérisé en ce que** l'application est effectuée au moyen d'au moins un dispositif de distribution de liquide, notamment une buse de pulvérisation (15), disposé sur la tête de distribution (9).

9. Procédé selon l'une quelconque des revendications 1 à 8, **caractérisé en ce que** la zone de la table de fabrication (1) à recouvrir par le tas (8) est humidifiée avant l'application du tas.

10. Procédé selon la revendication 9, **caractérisé en ce que** l'humidification de la table de fabrication est effectuée au moyen d'une buse de pulvérisation disposée sur la tête de distribution.
